(19) Europäisches Patentamt / European Patent Office / Office européen des brevets

(11) **EP 4 693 508 A1**

(12) **EUROPEAN PATENT APPLICATION**
published in accordance with Art. 153(4) EPC

(43) Date of publication:
**11.02.2026 Bulletin 2026/07**

(21) Application number: **24779869.7**

(22) Date of filing: **21.03.2024**

(51) International Patent Classification (IPC):
*H01M 4/62* (2006.01)    *H01M 4/13* (2010.01)
*H01M 4/139* (2010.01)

(52) Cooperative Patent Classification (CPC):
**H01M 4/13; H01M 4/139; H01M 4/62; Y02E 60/10**

(86) International application number:
**PCT/JP2024/011099**

(87) International publication number:
**WO 2024/203750 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023  JP 2023058920**

(71) Applicant: **Zeon Corporation**
**Tokyo 100-8246 (JP)**

(72) Inventors:
• **MIYAZAKI, Akihiko**
  **Tokyo 100-8246 (JP)**
• **SUGIMOTO, Takumi**
  **Tokyo 100-8246 (JP)**

(74) Representative: **Maiwald GmbH**
**Elisenhof**
**Elisenstraße 3**
**80335 München (DE)**

(54) **BINDER POWDER FOR NONAQUEOUS SECONDARY BATTERY ELECTRODE, MIXTURE POWDER COMPOSITION, METHOD FOR PRODUCING ELECTRODE FOR NONAQUEOUS SECONDARY BATTERY, AND NONAQUEOUS SECONDARY BATTERY**

(57) A binder powder for a non-aqueous secondary battery electrode, comprising a particulate polymer having an average primary particle diameter of 0.3 μm or more, wherein a proportion of particles having a particle diameter greater than 250 μm is 10% by weight or less.

**EP 4 693 508 A1**

**Description**

Technical Field

The present invention relates to a binder powder for a non-aqueous secondary battery electrode, a mixture powder composition, an electrode for a non-aqueous secondary battery and production method thereof, and a non-aqueous secondary battery.

Background Art

Electrodes of non-aqueous secondary batteries such as non-aqueous lithium ion secondary batteries are generally produced by a wet process using liquid materials containing solvents. For example, electrodes are produced by mixing an electrode mixture containing an electrode active material and a binder with a solvent to prepare a slurry composition, and applying the slurry composition onto a current collector and drying the same (Patent Literature 1).

However, in recent years, production of electrodes by a dry process using powdery materials has attracted attention. As a method for producing electrodes in such a dry process, for example, methods from Patent Literatures 2 and 3 have been known.

Citation List

Patent Literature

Patent Literature 1: International Publication No. 2018/034093 (corresponding publication: specification of U.S. patent application publication No. 2020/0052270)
Patent Literature 2: Japanese Patent No. 6327249
Patent Literature 3: specification of U.S. patent application publication No. 2020/0144591

Summary of The Invention

Technical Problem

However, in an electrode for a non-aqueous secondary battery produced by a dry process, the bonding strength between the current collector and the electrode active material layer tends to be low. Therefore, there is a demand for development of a technique with which the bonding strength between the current collector and the electrode active material layer is increased.

The present invention has been devised in view of the above-mentioned problems, and an object of the present invention is to provide a binder powder for a non-aqueous secondary battery electrode and a mixture powder composition with which an electrode for a non-aqueous secondary battery having excellent bonding strength between a current collector and an electrode active material layer can be obtained; an electrode for a non-aqueous secondary battery having excellent bonding strength between a current collector and an electrode active material layer and a method for producing the same; and a non-aqueous secondary battery including the electrode for a nonaqueous secondary battery.

Solution to Problem

The present inventor has conducted intensive studies to solve the above-mentioned problems. As a result, the present inventor has found that the above-mentioned problem can be solved by a binder powder that contains a particulate polymer having a specific average primary particle diameter and in which the content percentage of particles that have a particle diameter larger than or equal to a particular value falls within a predetermined range, thereby completing the present invention.

That is, the present invention includes the following.

<1> A binder powder for a non-aqueous secondary battery electrode, comprising a particulate polymer having an average primary particle diameter of 0.3 $\mu$m or more, wherein
a proportion of particles having a particle diameter greater than 250 $\mu$m is 10% by weight or less.
<2> The binder powder for a non-aqueous secondary battery electrode according to <1>, wherein a proportion of particles having a particle diameter greater than 74 $\mu$m of the binder powder is 10% by weight or less.

<3> The binder powder for a non-aqueous secondary battery electrode according to <1> or <2>, wherein an average primary particle diameter of the particulate polymer is 0.5 μm or more and 15 μm or less.

<4> The binder powder for a non-aqueous secondary battery electrode according to any one of <1> to <3>, wherein the particulate polymer has a glass transition temperature of 35°C or higher and 100°C or lower.

<5> A mixture powder composition comprising the binder powder for a non-aqueous secondary battery electrode according to any one of <1> to <4> and an electrode active material.

<6> An electrode for a non-aqueous secondary battery, comprising a current collector and an electrode active material layer formed of the mixture powder composition according to <5> on the current collector.

<7> The electrode for a non-aqueous secondary battery according to <6>, wherein a ratio $D_B/D_A$ of an average particle diameter $D_B$ of the particulate polymer contained in the electrode active material layer to an average particle diameter $D_A$ of the electrode active material is 0.01 or more and 1.0 or less.

<8> A non-aqueous secondary battery comprising the electrode for a non-aqueous secondary battery according to <6> or <7>.

<9> A method for producing a electrode for a non-aqueous secondary battery, comprising a step of forming an electrode active material layer from the mixture powder composition according to <5> in a dry system.

Advantageous Effects of Invention

According to the present invention, it is possible to provide a binder powder for a non-aqueous secondary battery electrode and a mixture powder composition with which an electrode for a non-aqueous secondary battery having excellent bonding strength between a current collector and an electrode active material layer can be obtained; an electrode for a non-aqueous secondary battery having excellent bonding strength between a current collector and an electrode active material layer and a method for producing the same; and a non-aqueous secondary battery including the electrode for the nonaqueous secondary battery.

Description of Embodiments

Hereinafter, the present invention will be described in detail with reference to embodiments and examples. However, the present invention is not limited to the embodiments and examples described hereinafter, and may be freely modified for implementation without departing from the scope of claims and the scope of their equivalents.

In the following description, unless otherwise specified, the electrode active material layer refers to a layer containing an electrode active material, the positive electrode active material layer refers to an electrode active material layer for a positive electrode, and the negative electrode active material layer refers to an electrode active material layer for a negative electrode.

In the following description, unless otherwise specified, the term "(meth)acrylic acid" encompasses acrylic acid, methacrylic acid, and combinations thereof. Also, unless otherwise specified, the term "(meth)acrylate" encompasses acrylates, methacrylates, and combinations thereof. Furthermore, unless otherwise specified, the term "(meth)acrylonitrile" encompasses acrylonitrile, methacrylonitrile, and combinations thereof.

<Binder powder>

A binder powder according to an embodiment of the present invention includes a particulate polymer. The binder powder may contain only the particulate polymer. The binder powder may be a powder in a dry state and may have a powdery form when in a normal temperature environment (generally, in an environment at 25°C).

The particulate polymer contained in the binder powder may be a primary particle in which particles of the particulate polymer are not aggregated, a secondary particle formed by aggregation of a plurality of particles of the particulate polymer, or a combination of the primary particles and the secondary particles. In general, the particulate polymer may have a distribution in particle diameter depending on characteristics such as the particle diameter of the individual primary particles and the state of aggregation. Therefore, the binder powder containing the particulate polymer may also have a distribution in the particle diameter thereof.

In the particle diameter distribution of the binder powder according to the present embodiment, the proportion of particles having a particle diameter greater than 250 μm falls within a particular range. Hereinafter, the particles having a particle diameter greater than 250 μm contained in the binder powder may be referred to as "first coarse particles". The proportion of the first coarse particles having a particle diameter greater than 250 μm in the particle diameter distribution is represented by the proportion of residual components remaining on a sieve having opening size of 250 μm (that is, the binder powder remaining on the sieve) when the binder powder is subjected to a sieve test in which the binder powder is caused to pass through the sieve. Hereinafter, the above-described proportion may be referred to as "sieve residual fraction". In addition, unless otherwise specified, the term "opening size" refers to the size of the opening width of the sieve.

The sieve residual fraction of the binder powder in the sieve test using the sieve having opening size of 250 $\mu$m is usually 10% by weight or less, preferably 8% by weight or less, more preferably 6% by weight or less, and still more preferably 5% by weight or less. The lower limit of the sieve residual fraction is usually 0% by weight or more, and may be 0.1% by weight or more or 0.5% by weight or more. The first coarse particles may include any of primary particles and aggregates in which a plurality of primary particles are aggregated. While the binder powder may contain a particulate polymer and particles of an optional component other than the particulate polymer as particles, in general, all or most of the particles contained in the binder powder are particulate polymer. Therefore, the range of the sieve residual fraction in the sieve test using a sieve having opening size of 250 $\mu$m may be the same as the range of the proportion of the particulate polymer (which may contain both primary particles and aggregates) having a particle diameter greater than 250 $\mu$m relative to the total amount of 100% by weight of the particulate polymer contained in the binder powder.

In the particle diameter distribution of the binder powder according to the present embodiment, the proportion of particles having a particle diameter greater than 74 $\mu$m preferably falls within a particular range. Hereinafter, the particles having a particle diameter greater than 74 $\mu$m contained in the binder powder may be referred to as "second coarse particles". The proportion of the second coarse particles having a particle diameter greater than 74 $\mu$m in the particle diameter distribution is represented by the proportion of residual components remaining on a sieve having opening size of 74 $\mu$m (that is, the binder powder remaining on the sieve) when the binder powder is subjected to a sieve test in which the binder powder is caused to pass through the sieve. The sieve residual fraction of the binder powder in the sieve test using the sieve having opening size of 74 $\mu$m is usually 10% by weight or less, preferably 8% by weight or less, more preferably 6% by weight or less, and still more preferably 5% by weight or less. The lower limit of the sieve residual fraction is usually 0% by weight or more, and may be 0.1% by weight or more or 0.5% by weight or more. The second coarse particles may include any of primary particles and aggregates in which a plurality of the primary particles are aggregated. In general, all or most of the particles contained in the binder powder are particulate polymer. Therefore, the range of the sieve residual fraction in the sieve test using a sieve having opening size of 74 $\mu$m may be the same as the range of the proportion of the particulate polymer (which may contain both primary particles and aggregates) having a particle diameter greater than 74 $\mu$m relative to the total amount of 100% by weight of the particulate polymer contained in the binder powder.

The sieve residual fraction of the binder powder may be measured by the following method. The binder powder with a weight W(0) as a sample is put through a sieve. After that, a weight W(1) of the binder powder (residual component) remaining on the sieve is measured. Then, the sieve residual fraction can be calculated using the following equation (M1). At this time, when the sieve residual fraction is measured with a sieve having opening size of 250 $\mu$m, it is possible to measure the proportion of the first coarse particles having a particle diameter greater than 250 $\mu$m. Further, when the sieve residual fraction is measured with a sieve having opening size of 74 $\mu$m, it is possible to measure the proportion of the second coarse particles having a particle diameter greater than 74 $\mu$m. As a specific measurement method, the method described in <Method for measuring sieve residual fraction of binder powder> of Example to be described later may be adopted.

$$\text{Sieve residual fraction (\%)} = W(1) \; / \; W(0) \; \times \; 100 \quad\quad (M1)$$

The sieve residual fraction of the binder powder can be adjusted, for example, by classification. As a specific example, after the particulate polymer is produced, the sieve residual fraction of the binder powder can be adjusted by performing classification using a sieve having an appropriate opening size.

The average primary particle diameter of the particulate polymer according to the present embodiment falls within a particular range. Specifically, the range of the average primary particle diameter of the particulate polymer is usually 0.3 $\mu$m or more, preferably 0.5 $\mu$m or more, and more preferably 0.8 $\mu$m or more. The upper limit of the average primary particle diameter of the particulate polymer may be set within a range in which the sieve residual fraction of the binder powder falls within the above-mentioned range, and this upper limit is preferably 30 $\mu$m or less, more preferably 15 $\mu$m or less, and still more preferably 10 $\mu$m or less.

The average primary particle diameter of the particulate polymer can be measured by the following method. An 1% aqueous solution of sodium linear alkylbenzene sulfonate and a particulate polymer are mixed and dispersed by ultrasonic waves to obtain a dispersion liquid in which the primary particles of the particulate polymer are dispersed. A cumulative particle diameter distribution of the dispersion liquid is measured by a Coulter counter. The particle diameter at which the integrated value obtained by integrating from the small diameter side of the cumulative particle diameter distribution becomes 50% can be obtained as the average primary particle diameter based on the volume of the particulate polymer. As a specific measurement method, a method described in <Method for measuring average primary particle diameter of particulate polymer contained in binder powder> of Example to be described later may be adopted.

The average primary particle diameter of the particulate polymer can be adjusted by, for example, the type and amount of metal hydroxide used in the production of the particulate polymer, and the production method and the production conditions of the particulate polymer.

According to the binder powder of the present embodiment satisfying the above-described requirements, it is possible to obtain an electrode for a non-aqueous secondary battery having excellent bonding strength between a current collector and an electrode active material layer. Without being bound by any particular theory, the inventor of the present invention infers a mechanism for obtaining such an excellent effect as follows. However, the technical scope of the present invention is not limited by the mechanism described below.

In the binder powder according to the present embodiment, the content of excessively large coarse particles (such as the first coarse particles and the second coarse particles) is small, as represented by the sieve residual fraction. In addition, the content of excessively small fine particles in the binder powder according to the present embodiment is small, as represented by the average primary particle diameter of the particulate polymer. Therefore, the particle diameter uniformity of the particles (the particles including the primary particles, the secondary particles, and the combination thereof) of the particulate polymer contained in the binder powder is high. Therefore, when the electrode active material layer containing such particulate polymers is formed, the composition of the electrode active material layer can have high uniformity. When a stress is applied to separate the current collector and the electrode active material layer in the electrode, occurrence of points where stress is concentrated is thus suppressed. Therefore, peeling starting from those points is suppressed, and with this effect high bonding strength can be achieved.

The particulate polymer preferably has a glass transition temperature Tg that falls within a particular range. The range of the glass transition temperature Tg of the particulate polymer is preferably 10°C or higher, more preferably 20°C or higher, and still more preferably 35°C or higher, and is preferably 130°C or lower, more preferably 120°C or lower, and still more preferably 100°C or lower. When the glass transition temperature Tg of the particulate polymer falls within the above-mentioned range, bonding strength between the current collector and the electrode active material layer of the electrode produced by using the binder powder can be effectively increased.

The glass transition temperature Tg of the particulate polymer may be measured according to JIS K 7121:1987 using a differential scanning calorimeter under condition of a rate of temperature increase of 20°C/min. As a specific measurement method, the method described in <Method for measuring glass transition temperature> of Example described later may be adopted.

It is preferable that the particulate polymer contains an aromatic monovinyl monomer unit. The aromatic monovinyl monomer unit refers to a structural unit having a structure formed by polymerizing an aromatic monovinyl monomer. Examples of the aromatic monovinyl monomer may include styrene, $\alpha$-methylstyrene, and vinyltoluene. Among these, styrene is preferable. As the aromatic monovinyl monomer units, one type thereof may be solely contained in the particulate polymer, and two or more types thereof may also be contained in combination.

The ratio of the aromatic monovinyl monomer unit in the particulate polymer is preferably 45% by weight or more, more preferably 50% by weight or more, and still more preferably 55% by weight or more, and is preferably 99.5% by weight or less, more preferably 95% by weight or less, and still more preferably 90% by weight or less. The ratio of the aromatic monovinyl monomer unit in the particulate polymer is usually the same as the weight ratio (the charging ratio of the aromatic monovinyl monomer) of the aromatic monovinyl monomer with respect to the total weight of the monomers used in producing the particulate polymer.

The particulate polymer preferably contains a (meth)acrylic acid alkyl ester monomer unit. The (meth)acrylic acid alkyl ester monomer unit refers to a structural unit having a structure formed by polymerizing a (meth)acrylic acid alkyl ester monomer. The (meth)acrylic acid alkyl ester monomer encompasses an acrylic acid alkyl ester monomer, a methacrylic acid alkyl ester monomer, and combinations thereof. Examples of the (meth)acrylic acid alkyl ester monomer may include an acrylic acid alkyl ester monomer such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and a methacrylic acid alkyl ester monomer such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate. Among these, a (meth)acrylic acid alkyl ester monomer of which the alkyl group that is bonded to non-carbonyl oxygen atoms has 4 or more carbon atoms is preferable. A (meth)acrylic acid alkyl ester monomer of which the alkyl group that is bonded to non-carbonyl oxygen atoms has 6 or more and 20 or less carbon atoms is more preferable. As the (meth)acrylic acid alkyl ester monomer units, one type thereof may be solely contained in the particulate polymer, and two or more types thereof may also be contained in combination.

The ratio of the (meth)acrylic acid alkyl ester monomer unit in the particulate polymer is preferably 0% by weight or more, more preferably 2% by weight or more, and still more preferably 5% by weight or more, and is preferably 55% by weight or less, more preferably 50% by weight or less, and still more preferably 45% by weight or less. The ratio of the (meth)acrylic acid alkyl ester monomer unit in the particulate polymer is usually the same as the weight ratio (the charging ratio of the (meth)acrylic acid alkyl ester monomer) of the (meth)acrylic acid alkyl ester monomer with respect to the total weight of the monomers used in producing the particulate polymer.

The particulate polymer preferably contains a crosslinkable monomer unit. The crosslinkable monomer unit refers to a structural unit having a structure formed by polymerizing a crosslinkable monomer. The crosslinkable monomer refers to a monomer capable of forming a crosslinked structure when polymerized. Examples of the crosslinkable monomer may include a monomer having two or more reactive groups per one molecule. Specific examples of the crosslinkable monomer may include a monofunctional crosslinkable monomer having a crosslinkable group that is thermally crosslinkable and one olefinic double bond per one molecule; and a multifunctional crosslinkable monomer having two or more olefinic double bonds per one molecule.

Examples of the crosslinkable group that is thermally crosslinkable contained in the crosslinkable monomer may include an epoxy group, an N-methylolamido group, an oxetanyl group, an oxazoline group, and combinations thereof. Among these, an epoxy group is preferable. Examples of the monofunctional crosslinkable monomer having an epoxy group as the crosslinkable group that is thermally crosslinkable and an olefinic double bond may include: an unsaturated glycidyl ether such as vinyl glycidyl ether, allyl glycidyl ether, butenyl glycidyl ether, and o-allylphenyl glycidyl ether; monoepoxide of diene or polyene such as butadiene monoepoxide, chloroprene monoepoxide, 4,5-epoxy-2-pentene, 3,4-epoxy-1-vinylcyclohexene, and 1,2-epoxy-5,9-cyclododecadiene; an alkenyl epoxide such as 3,4-epoxy-1-butene, 1,2-epoxy-5-hexene, and 1,2-epoxy-9-decene; and an unsaturated carboxylic acid glycidyl ester such as glycidyl acrylate, glycidyl methacrylate, glycidyl crotonate, glycidyl-4-heptenoate, glycidyl sorbate, glycidyl linolate, glycidyl-4-methyl-3-pentenoate, a glycidyl ester of 3-cyclohexene carboxylic acid, and a glycidyl ester of 4-methyl-3-cyclohexene carboxylic acid. Among these, an unsaturated glycidyl ether and a glycidyl ester of an unsaturated carboxylic acid are preferable. Allyl glycidyl ether and glycidyl methacrylate are more preferable, and glycidyl methacrylate is still more preferable.

The ratio of the monofunctional crosslinkable monomer unit in the particulate polymer is preferably 0% by weight or more, more preferably 2% by weight or more, and still more preferably 5% by weight or more, and is preferably 25% by weight or less, more preferably 22% by weight or less, and still more preferably 20% by weight or less. The monofunctional crosslinkable monomer unit refers to a structural unit having a structure formed by polymerizing a monofunctional crosslinkable monomer. The ratio of the monofunctional crosslinkable monomer unit in the particulate polymer is usually the same as the weight ratio (the charging ratio of the monofunctional crosslinkable monomer) of the monofunctional crosslinkable monomer with respect to the total weight of the monomers used in producing the particulate polymer.

Examples of the polyfunctional crosslinkable monomer having 2 or more olefinic double bonds may include allyl (meth)acrylate, ethylene di(meth)acrylate, ethylene glycol di(meth)acrylate, diethylene glycol di(meth)acrylate, triethylene glycol di(meth)acrylate, tetraethylene glycol di(meth)acrylate, trimethylolpropanetri(meth)acrylate, dipropylene glycol diallyl ether, polyglycol diallyl ether, triethylene glycol divinyl ether, hydroquinone diallyl ether, tetraallyloxyethane, trimethylolpropane-diallyl ether, allyl or vinyl ether of polyfunctional alcohols other than the above, triallylamine, methylenebisacrylamide, and divinylbenzene. Among these, ethylene di(meth)acrylate, ethylene glycol di(meth)acrylate, and divinylbenzene are preferable. Ethylene glycol di(meth)acrylate is more preferable, and ethylene glycol dimethacrylate is still more preferable.

The ratio of the polyfunctional crosslinkable monomer unit in the particulate polymer is preferably 0% by weight or more, more preferably 0.1% by weight or more, and still more preferably 0.2% by weight or more, and is preferably 10% by weight or less, more preferably 8% by weight or less, and still more preferably 5.0% by weight or less. The polyfunctional crosslinkable monomer unit refers to a structural unit having a structure formed by polymerizing a polyfunctional crosslinkable monomer. The ratio of the polyfunctional crosslinkable monomer unit in the particulate polymer is usually the same as the weight ratio (the charging ratio of the polyfunctional crosslinkable monomer) of the polyfunctional crosslinkable monomer with respect to the total weight of the monomers used in producing the particulate polymer.

As the crosslinkable monomer units, one type thereof may be solely contained in the particulate polymer, and two or more types thereof may also be contained in combination.

The ratio of the crosslinkable monomer unit in the particulate polymer is preferably 0% by weight or more, more preferably 0.1% by weight or more, and still more preferably 0.2% by weight or more, and is preferably 25% by weight or less, more preferably 22% by weight or less, and still more preferably 20% by weight or less. The ratio of the crosslinkable monomer unit in the particulate polymer is usually the same as the weight ratio (the charging ratio of the crosslinkable monomers) of the crosslinkable monomer with respect to the total weight of the monomers used in producing the particulate polymer.

The particulate polymer may contain an $\alpha,\beta$-ethylenically unsaturated nitrile monomer unit. The $\alpha,\beta$-ethylenically unsaturated nitrile monomer unit refers to a structural unit having a structure formed by polymerizing an $\alpha,\beta$-ethylenically unsaturated nitrile monomer. As the $\alpha,\beta$-ethylenically unsaturated nitrile monomer, an $\alpha,\beta$-ethylenically unsaturated compound having a nitrile group may be used. Examples of the $\alpha,\beta$-ethylenically unsaturated nitrile monomer may include acrylonitrile; $\alpha$-halogenoacrylonitrile such as $\alpha$-chloroacrylonitrile and $\alpha$-bromoacrylonitrile; and $\alpha$-alkylacrylonitrile such as methacrylonitrile. As the $\alpha,\beta$-ethylenically unsaturated nitrile monomer units, one type thereof may be solely contained in the particulate polymer, and two or more types thereof may also be contained in combination.

The particulate polymer may contain an ethylenically unsaturated carboxylic acid monomer unit. The ethylenically unsaturated carboxylic acid monomer unit refers to a structural unit having a structure formed by polymerizing an ethylenically unsaturated carboxylic acid monomer. Examples of the ethylenically unsaturated carboxylic acid monomer may include acrylic acid, methacrylic acid, maleic acid, fumaric acid, and itaconic acid. As the ethylenically unsaturated carboxylic acid monomer units, one type thereof may be solely contained in the particulate polymer, and two or more types thereof may also be contained in combination.

The ratio of the ethylenically unsaturated carboxylic acid monomer unit in the particulate polymer is preferably 0.1% by weight or more, more preferably 0.5% by weight or more, and still more preferably 1% by weight or more, and is preferably 10% by weight or less, more preferably 7% by weight or less, and still more preferably 5% by weight or less. The ratio of the ethylenically unsaturated carboxylic acid monomer unit in the particulate polymer is usually the same as the weight ratio (the charging ratio of the ethylenically unsaturated carboxylic acid monomer) of the ethylenically unsaturated carboxylic acid monomer with respect to the total weight of the monomers used in producing the particulate polymer.

The particulate polymer may contain an ethylenically unsaturated amide monomer unit. The ethylenically unsaturated amide monomer unit refers to a structural unit having a structure formed by polymerizing an ethylenically unsaturated amide monomer. Examples of the ethylenically unsaturated amide monomer may include (meth)acrylamide, N-methylol (meth)acrylamide, and N,N'-dimethylol (meth)acrylamide. As the ethylenically unsaturated amide monomer units, one type thereof may be solely contained in the particulate polymer, and two or more types thereof may also be contained in combination.

The shape of the primary particles of the particulate polymer is preferably spherical. The spherical shape of the particles means that the sphericity of the particles is 80% or more. When the primary particles of the particulate polymer are spherical, the binder powder can have high fluidity. The sphericity is expressed as a value represented by $(1 - (Ll - Ls)/La) \times 100$. Herein, Ls represents a minor axis diameter, Ll represents a major axis diameter, and La represents $(Ls + Ll)/2$. The minor axis diameter Ls and major axis diameter Ll of the particulate polymer may be measured based on photographic images taken using a transmission electron microscope or a scanning electron microscope. It is preferable to use the respective averages of the major axis diameters and minor axis diameters of 10 to 30 primary particles of the particulate polymer as the values of Ls and Ll described above.

As described above, the particulate polymer contained in the binder powder may be primary particles, secondary particles, or a combination thereof. Thus, for example, the particulate polymer contained in the binder powder may exist as an aggregate (secondary particles) having a shape in which a plurality of primary particles are bonded. The primary particles of the particulate polymer may exist as separate independent particles, or a plurality of primary particles may form one secondary particle by forming bonds via a bonding force such as an intermolecular force while maintaining the shape thereof. In addition, the secondary particles that are formed by the plurality of primary particles may be crushed by an external force, so that primary particles may exist as separate independent particles. In general, the binder powder containing the particulate polymer as such primary particles or secondary particles can have fluidity.

The particulate polymer may be water soluble or water insoluble. The term "water soluble" as a descriptor of a material means that, when 0.5 g of the material is dissolved in 100 g water at 25°C, the insoluble content of the material is less than 0.5% by weight. In addition, the term "water insoluble" as a descriptor of a material means that, when 0.5 g of the material is dissolved in 100 g water at 25°C, the insoluble content of the material is 90% by weight or more.

All or most of the binder powder is composed of the particulate polymer described above. Specifically, the amount of the particulate polymer is preferably 95% by weight to 100% by weight, more preferably 97% by weight to 100% by weight, still more preferably 99% by weight to 100% by weight, and particularly preferably 100% by weight, relative to 100% by weight of the total amount of the binder powder. When the content of the particulate polymer in the binder powder is large as described above, bonding strength between the current collector and the electrode active material layer of the electrode produced by using the binder powder can be effectively increased.

As long as the advantageous effects of the present invention are not significantly impaired, the binder powder may contain any optional components other than the particulate polymer. Examples of the optional components may include a polymerization additive such as a surfactant, an emulsifier, a dispersion stabilizer, a polymerization initiator and a chain transfer agent used for polymerization of the particulate polymer. However, it is preferable that the amount of the optional component is small, and it is more preferable that the binder powder does not contain the optional component.

The binder powder may contain a solvent or may not contain a solvent. Herein, the solvent refers to a liquid component in a normal temperature environment (generally, in an environment at 25°C). Examples of the solvent may include water. Preferably, the binder powder may be a powder in a dry state and thus, it is preferable that a solvent is not substantially contained. The amount of the solvent contained in the binder powder is preferably 0% by weight to 5% by weight, more preferably 0% by weight to 1% by weight, still more preferably 0% by weight to 0.5% by weight, still more preferably 0% by weight to 0.1% by weight, and particularly preferably less than 0.1% by weight.

The volatile content of the binder powder at 120°C is preferably less than 1% by weight from the viewpoint of increasing the fluidity of the binder powder to increase the uniformity of the thickness of the electrode active material layer. The volatile content of the binder powder at 120°C may be measured by the following method. The binder powder is placed in an oven set at 120°C. The weight of the binder powder is measured every 10 minutes, and the measurement is completed when the weight change becomes less than 0.1%. The weight change ratio (decreasing amount) from the initial weight to the weight at the end of measurement of the binder powder can be determined as the volatile content at 120°C.

The method for producing the binder powder is not particularly limited. For example, the binder powder may be produced by a method including a step of producing a particulate polymer, and a step of classifying the produced particulate polymer.

The particulate polymer can be produced by a process including polymerizing monomers. There is no particular limitation on the method for polymerizing the monomers. Examples of the polymerization methods may include a solution polymerization method, a suspension polymerization method, a bulk polymerization method, and an emulsion polymerization method. Among these, a suspension polymerization method and an emulsion polymerization method are preferable.

In the polymerization method described above, generally, a monomer composition containing the monomers described above may be polymerized in a reaction solvent to produce the particulate polymer. In this case, the ratio of each monomer in the monomer composition is usually the same as the ratio of the corresponding structural unit in the particulate polymer. The polymerization may be performed in a reaction system containing a polymerization additive, such as a surfactant, an emulsifier, a dispersant, a polymerization initiator, and a chain transfer agent. As a specific example, in a suspension polymerization method (including a fine suspension polymerization method), an aqueous dispersion of the particulate polymer may be obtained by using a dispersant such as polyvinyl alcohol or magnesium hydroxide. For example, in an emulsion polymerization method, a latex (aqueous dispersion) of the particulate polymer may be obtained by using an emulsifier such as sodium dodecylbenzene sulfonate.

The method for producing the binder powder may include a step of drying the particulate polymer after the particulate polymer is produced. Preferably, after the produced particulate polymer is washed and/or purified by suitable methods, the drying of the particulate polymer is performed. In many cases, the polymerization of the particulate polymer is performed in water. Therefore, a method capable of smoothly removing water is preferable as a drying method. Furthermore, the drying method is more preferably a method in which the particulate polymer can be dried in a manner that achieves a redispersible state without excessive adhesion between the primary particles. Specific examples of the drying method may include a method of spray-drying an aqueous dispersion of the particulate polymer; and a method of drying with a rotary evaporator. Furthermore, it is more preferable to dry the particulate polymer under a vacuum condition after performing spray drying or drying with a rotary evaporator as described above.

The drying temperature is preferably lower than the minimum film forming temperature of the particulate polymer from the viewpoint of suppressing excessive adhesion between the primary particles of the particulate polymer and performing drying in a manner that achieves a redispersible state. The minimum film forming temperature of the particulate polymer is preferably 35°C to 100°C from the viewpoint of drying the particulate polymer in a manner that achieves a redispersible state to improve fluidity of the binder powder.

The minimum film forming temperature of the particulate polymer refers to the lowest temperature at which a film of the particulate polymer can be formed. The minimum film forming temperature can be measured, for example, according to JIS K6828-2(2003) or ISO 2115. Specifically, an aqueous dispersion liquid of the particulate polymer is applied and dried onto a flat plate such as an iron plate having a suitable temperature gradient to have a thickness of about 100 $\mu$m, and a boundary temperature between a portion where a film is formed and a portion where a film is not formed is measured. Herein, since the film-formed portion becomes transparent and the non-film-formed portion becomes cloudy, the boundary between the film-formed portion and the non-film-formed portion can be visually confirmed. In addition, when the flat plate is rubbed after the aqueous dispersion of the particulate polymer is applied and dried, the non-film-formed portion generates powder. Therefore, the boundary between the film-formed portion and the non-film-formed portion can be determined based on the presence or absence of the generated powder. The minimum film forming temperature can be measured, for example, by performing a test using a minimum film forming temperature instrument(MFFTB90 manufactured by Rohpoint Instruments Ltd.) according to ISO 2115.

The method for producing a binder powder preferably includes, after producing a particulate polymer and drying the particulate polymer as necessary, a step of classifying the particulate polymer. Although there is no limitation on the classification method, it is preferable to perform classification by a filtration method using a filter. Among these, from the viewpoint of smoothly performing classification, it is more preferable to perform filtration using a vibrating sieve such as an ultrasonic sieve.

<Mixture powder composition>

A mixture powder composition according to an embodiment of the present invention includes the binder powder described above and an electrode active material. The mixture powder composition can be a powder composition in a dry state and can have a powdery form when in a normal temperature environment (generally, in an environment at 25°C). With this mixture powder composition, electrodes for a non-aqueous secondary battery having excellent bonding strength between the current collector and the electrode active material layer can be obtained.

In the mixture powder composition, the particulate polymer included in the binder powder and the electrode active material are both in a particulate state. In the mixture powder composition, each of the particulate polymer and the electrode active material may exist as separate independent particles. In the mixture powder composition, one or a plurality of particulate polymers may adhere onto the surface of the particles of the electrode active material to form composite particles. In the mixture powder composition, a plurality of particles of the particulate polymer and the electrode active material and the composite particles may be bonded to form secondary particles while maintaining their particle shapes. Usually, such secondary particles can be returned to individually independent particles (particulate polymer, electrode active material, or composite particles) by being smoothly crushed when subjected to an external force, and thus the mixture powder composition can have high fluidity.

The binder powder included in the mixture powder composition is as described above. The range of the amount of the binder powder relative to 100% by weight of the mixture powder composition is preferably 0.5% by weight or more, more preferably 1.0% by weight or more, and still more preferably 1.5% by weight or more, and is preferably 10% by weight or less, more preferably 6% by weight or less, and still more preferably 4% by weight or less. When the amount of the binder powder falls within the above-described range, bonding strength between the current collector and the electrode active material layer of the electrode produced by using the mixture powder composition can be effectively increased.

In addition, as described above, all or most of the binder powder is usually the particulate polymer. Therefore, the range of the amount of the particulate polymer relative to 100% by weight of the mixture powder composition may be the same as the range of the amount of the binder powder relative to 100% by weight of the mixture powder composition.

As the electrode active material, a material corresponding to the type of the non-aqueous secondary battery may be used. For example, in the case where the non-aqueous secondary battery is a lithium ion secondary battery, the electrode active material may be a material capable of reversibly intercalating or deintercalating lithium ions by applying an electric potential in an electrolyte solution. Such an electrode active material may be classified into a positive electrode active material serving as an electrode active material for a positive electrode and a negative electrode active material serving as an electrode active material for a negative electrode.

As a positive electrode active material for a lithium ion secondary battery, an active material capable of doping and dedoping lithium ions is used, and examples thereof may include a positive electrode active material formed of an inorganic compound, a positive electrode active material formed of an organic compound, and a composite material obtained by combining these materials.

Examples of the positive electrode active material formed of an inorganic compound may include a transition metal oxide, a transition metal sulfide, and a lithium-containing composite metal oxide containing lithium and a transition metal. As the transition metal described above, for example, Ti, V, Cr, Mn, Fe, Co, Ni, Cu, or Mo is used.

Examples of the transition metal oxide may include $MnO$, $MnO_2$, $V_2O_5$, $V_6O_{13}$, $TiO_2$, $Cu_2V_2O_3$, amorphous $V_2OP_2O_5$, and $MoO_3$. Among these, $MnO$, $V_2O_5$, $V_6O_{13}$, and $TiO_2$ are preferable from the viewpoint of cycle stability and capacity.

Examples of the transition metal sulfide may include $TiS_2$, $TiS_3$, amorphous $MoS_2$, and $FeS$.

Examples of the lithium-containing composite metal oxide may include a lithium-containing composite metal oxide having a layered structure, a lithium-containing composite metal oxide having a spinel structure, and a lithium-containing composite metal oxide having an olivine-type structure. Examples of the lithium-containing composite metal oxide having a layered structure may include a lithium-containing cobalt oxide ($LiCoO_2$), a lithium-containing nickel oxide ($LiNiO_2$), a Co-Ni-Mn lithium composite oxide, a Ni-Mn-Al lithium composite oxide, and a Ni-Co-Al lithium composite oxide. Examples of the lithium-containing composite metal oxide having a spinel structure may include lithium manganate ($LiMn_2O_4$), and $Li[Mn_{3/2}M^1{}_{1/2}]O_4$ (wherein $M^1$ represents a transition metal other than Mn, such as Cr, Fe, Co, Ni, and Cu) in which part of Mn is substituted with another transition metal. Examples of the lithium-containing composite metal oxide having an olivine-type structure may include olivine-type lithium phosphate compounds represented by $Li_XM^2PO_4$ (in the formula, $M^2$ represents at least one element selected from the group consisting of Mn, Fe, Co, Ni, Cu, Mg, Zn, V, Ca, Sr, Ba, Ti, Al, Si, B, and Mo, and X represents a number satisfying $0 \leq X \leq 2$).

Examples of the positive electrode active material formed of an organic compound may include electroconductive macromolecules such as polyacetylene and poly-p-phenylene.

Furthermore, for example, a composite material covered with a carbon material may be produced by reduction firing of an iron-based oxide in the presence of a carbon source material, and the resulting composite material may be used as a positive electrode active material. Although iron-based oxides tend to have poor electroconductivity, the composite material produced as described above can be used as a high-performance positive electrode active material.

As the positive electrode active materials, one type thereof may be solely used, and two or more types thereof may also be used in combination. Furthermore, a mixture of the inorganic compound and the organic compound described above may be used as the positive electrode active material.

Examples of the negative electrode active material for a lithium ion secondary battery may include a carbonaceous material such as amorphous carbon, graphite, natural graphite, mesocarbon microbeads, and pitch-based carbon fibers; an electroconductive macromolecule such as polyacene; metal such as silicon, tin, zinc, manganese, iron, and nickel, or alloys thereof; an oxide or sulfate of the metal or alloy above; metal lithium; a lithium alloy such as Li-Al, Li-Bi-Cd, and Li-Sn-Cd; a lithium transition metal nitride; and silicon. A material in which an electroconductive material is attached to the surface of particles of a negative electrode active material by, for example, a mechanical modification method may be used. As the negative electrode active materials, one type thereof may be solely used, and two or more types thereof may also be used in combination.

Generally, the electrode active material may be particles formed of the material described above. The electrode active material preferably has a volume-average particle diameter within a particular range. Specifically, the volume-average particle diameter of the electrode active material is preferably 1 μm or more, more preferably 3 μm or more, and still more preferably 5 μm or more, and is preferably 50 μm or less, more preferably 40 μm or less, and still more preferably 35 μm or less. When the volume-average particle diameter of the electrode active material falls within the above-described range, bonding strength between the current collector and the electrode active material layer of the electrode produced by using the mixture powder composition can be effectively increased.

In addition, the particle diameter ratio (the "average primary particle diameter of the particulate polymer" / "volume-average particle diameter of the electrode active material") between the average primary particle diameter of the particulate polymer and the volume-average particle diameter of the electrode active material in the mixture powder composition preferably falls within a particular range. Specifically, the particle diameter ratio is preferably 0.01 or more, more preferably 0.03 or more, and still more preferably 0.05 or more, and is preferably 1.0 or less, more preferably 0.8 or less, and still more preferably 0.5 or less.

The volume-average particle diameter of an electrode active material can be measured by the following method. A cumulative particle diameter distribution of the electrode active material is measured by a dry system using a laser diffraction/scattering particle diameter distribution measuring apparatus. The particle diameter at which the integrated value obtained by integrating from the small diameter side of the cumulative particle diameter distribution becomes 50% can be obtained as the volume-average particle diameter of the electrode active material. As a specific measurement method, the method described in <Method for measuring volume-average particle diameter of electrode active material> of Example described later may be adopted.

The amount of the electrode active material relative to 100% by weight of the mixture powder composition is preferably 80% by weight or more, more preferably 85% by weight or more, and still more preferably 90% by weight or more, and is preferably 99% by weight or less, more preferably 98.5% by weight or less, and still more preferably 98% by weight or less. When the amount of the electrode active material falls within the above-described range, bonding strength between the current collector and the electrode active material layer of the electrode produced by using the mixture powder composition can be effectively increased.

As long as the advantageous effects of the present invention is not significantly impaired, the mixture powder composition may contain any optional component other than the binder powder and the electrode active material. Examples of the optional component may include an electroconductive material. Examples of the electroconductive material may include carbon black such as furnace black, acetylene black, and Ketjen Black (registered trademark); carbon nanotube; carbon nanohorn; and electroconductive carbons such as graphene. Among these, carbon black is preferable, and acetylene black is more preferable. As the electroconductive materials, one type thereof may be solely used, and two or more types thereof may also be used in combination.

The electroconductive material is generally included in the form of particles in the mixture powder composition.

The amount of the electroconductive material is preferably 1 part by weight or more, preferably 10 parts by weight or less, and more preferably 5 parts by weight or less, relative to 100 parts by weight of the electrode active material.

The mixture powder composition may contain a solvent or may not contain a solvent. Preferably, the mixture powder composition may be a powder in a dry state, and therefore preferably does not substantially contain a solvent. The amount of the solvent contained in the mixture powder composition is preferably 0% by weight to 1% by weight, more preferably 0% by weight to 0.5% by weight, still more preferably 0% by weight to 0.1% by weight, and particularly preferably less than 0.1% by weight.

The method for producing the mixture powder composition is not particularly limited. For example, the mixture powder composition may be produced by a method including mixing a binder powder and an electrode active material, and optional components such as an electroconductive material, as necessary. The mixing is preferably performed by dry mixing. "Dry mixing" refers to mixing in a state of being substantially free of a liquid, and specifically refers to mixing at a concentration of 99% by weight or more of a solid content (components other than the liquid) at the time of mixing.

Examples of specific methods of dry mixing may include a container stirring method using a mixing device (for example, a rocking mixer, and a tumbler mixer) in which the container itself is shaken, rotated, or vibrated; a mechanical stirring method using a mixing device (for example, a horizontal cylindrical mixer, a V-type mixer, a ribbon mixer, a conical screw mixer, a high-speed flow mixer, a rotating disk mixer, and a high-speed rotating blade mixer) including, in a container, a rotating shaft disposed horizontally or vertically and a stirring member such as a blade, a rotating disc, or a screw attached to this rotation shaft for stirring; and an airflow stirring method using a swirling air flow with compressed air to mix the powder in a fluidized bed. These mixing methods may be performed solely, and two or more thereof may also be performed in combination. Furthermore, after dry mixing, crushing may be performed to the extent that the aggregation is loosened by a crusher such as a mortar. By dry mixing, the dispersion state of the mixture powder composition is maintained well, and thus various physical properties such as coating accuracy can be improved.

<Electrode for non-aqueous secondary battery>

An electrode for a non-aqueous secondary battery according to an embodiment of the present invention includes a current collector and an electrode active material layer formed of the above-described mixture powder composition on the current collector. Therefore, the electrode active material layer usually includes the above-described mixture powder composition. Hereinafter, an electrode for a non-aqueous secondary battery may be simply referred to as an "electrode".

The material of the current collector is preferably an material having electroconductivity and electrochemical durability. Specific examples of the material of the current collector may include a metal, carbon, and an electroconductive macromolecule. The metal is preferable. Examples of the metal may include copper, aluminum, platinum, nickel, tantalum, titanium, stainless steel, and alloys thereof. Among these, copper, aluminum, and aluminum alloy are preferable from the viewpoint of electroconductivity and withstand voltage. When high withstand voltage is required, high-purity aluminum disclosed in Japanese Patent Application Laid-Open No. 2001-176757 A may be preferably used. Among these, aluminum is preferable as the material of the current collector used for a positive electrode, and copper is preferable as the material of the current collector used for a negative electrode. As these materials, one type thereof may be solely used, and two or more types thereof may also be used in combination.

The current collector generally has a film-shape or sheet-shape. The thickness of the current collector may be appropriately selected depending on the purpose of use. The thickness is preferably 1 $\mu$m or more, more preferably 5 $\mu$m or more, and still more preferably 10 $\mu$m or more, and is preferably 200 $\mu$m or less, more preferably 100 $\mu$m or less, and still more preferably 50 $\mu$m or less.

The electrode active material layer is formed of the above-described mixture powder composition. Therefore, the electrode active material layer includes the electrode active material and the particulate polymer, and further includes optional components such as an electroconductive material, as necessary. In the electrode active material layer, the particles of the electrode active material are bonded to each other, the particles of the electroconductive material are bonded to each other, and the particles of the electrode active material and the particles of the electroconductive material are bonded to each other by the particulate polymer. In the electrode active material layer, the particulate polymer, the electrode active material, and optional components such as the electroconductive material may maintain the particle shape that has been had in the mixture powder composition, and may be deformed by heat and pressure that may be applied in the step of forming the electrode active material layer. Generally, the electrode active material and the electroconductive material maintain their particle shapes that has been had in the mixture powder composition. The particulate polymer may be deformed by heat and pressure.

A ratio $D_B/D_A$ of an average particle diameter $D_B$ of the particulate polymer contained in the above-mentioned electrode active material layer to an average particle diameter $D_A$ of the electrode active material preferably falls within a particular range. Specifically, the ratio $D_B/D_A$ is preferably 0.01 or more, more preferably 0.03 or more, and still more preferably 0.05 or more, and is preferably 1.0 or less, more preferably 0.8 or less, and still more preferably 0.5 or less. When the ratio $D_B/D_A$ falls within the above-mentioned range, bonding strength between the current collector and the electrode active material layer can be effectively increased.

The ratio $D_B/D_A$ of the average particle diameters of the particulate polymer and the electrode active material contained in the electrode active material layer can be measured by the following method.

A cross section is formed in the electrode active material layer. The cross section is observed using an FE-SEM (field emission scanning electron microscope) to obtain a cross-sectional image. In the cross-sectional image of the electrode active material layer, the diameter of each particle of the particulate polymer is measured by performing circumcircle fitting on the particles (primary particles) of the particulate polymer in the electrode active material layer. The average of the diameters of 50 arbitrarily selected particles of the particulate polymer is obtained as the average particle diameter $D_B$ of the particulate polymer in the electrode active material layer. In the above-mentioned cross-sectional image, the diameter of each particle of the electrode active material is measured by performing circumcircle fitting on the particles (primary particles) of the electrode active material in the electrode active material layer. The average of the diameters of 50 arbitrarily selected particles of the electrode active material is obtained as the average particle diameter $D_A$ of the electrode active material in the electrode active material layer. From the average particle diameters $D_B$ and $D_A$ thus determined, the ratio $D_B/D_A$ is calculated. As a specific measurement method, the method described in <Method for measuring ratio of average particle diameter of particulate polymer to average particle diameter of electrode active material in electrode active material layer> of Example to be described later may be adopted.

The amount of the electrode active material layer per unit area is not particularly limited. The amount thereof is preferably 10 mg/cm$^2$ or more, more preferably 15 mg/cm$^2$ or more, and still more preferably 20 mg/cm$^2$ or more, and is preferably 35 mg/cm$^2$ or less, more preferably 30 mg/cm$^2$ or less, and still more preferably 25 mg/cm$^2$ or less.

The density of the electrode active material layer is not particularly limited. The density thereof is preferably 2.5

g/cm$^3$ or more, more preferably 3.0 g/cm$^3$ or more, and still more preferably 3.3 g/cm$^3$ or more, and is preferably 4.0 g/cm$^3$ or less, more preferably 3.8 g/cm$^3$ or less, and still more preferably 3.6 g/cm$^3$ or less.

The thickness of the electrode active material layer is not particularly limited. The thickness thereof is preferably 30 $\mu$m or more, more preferably 50 $\mu$m or more, and still more preferably 60 $\mu$m or more, and is preferably 100 $\mu$m or less, more preferably 90 $\mu$m or less, and still more preferably 80 $\mu$m or less.

The electrode according to the present embodiment can have excellent bonding strength between the current collector and the electrode active material layer. The bonding strength can be evaluated by the force required to peel off the current collector from the electrode active material layer. Hereinafter, this force may be referred to as "peel strength". In an example, the peel strength is preferably 10 N/m or more, more preferably 15 N/m or more, and still more preferably 20 N/m or more. The peel strength can be measured as a stress when a current collector of an electrode having an electrode active material layer fixed to a plane is pulled at a tensile speed of 100 mm/minute in a direction perpendicular with respect to the plane and the current collector is peeled off from the electrode active material layer. As a specific method for measuring the peel strength, the method described in <Method for evaluating bonding strength between current collector and electrode active material layer> of Example to be described later may be adopted.

The electrode according to the present embodiment can be produced by a method including a step of forming an electrode active material layer from the above-described mixture powder composition. Usually, a layer of the mixture powder composition is formed by an appropriate method, so that an electrode active material layer can be formed as the layer of the mixture powder composition. The formation of the electrode active material layer from the mixture powder composition is preferably performed in a dry system. Herein, the mode of forming the electrode active material layer from the mixture powder composition "in a dry system" means that the electrode active material layer is formed by the mixture powder composition in a powdery form, and the mixture powder composition may contain a solvent as long as the mixture powder composition can be in a powdery form. In an example, when the electrode active material layer is formed in a dry system, it is preferable to form the electrode active material layer without mixing a liquid such as a solvent with the mixture powder composition.

The method for producing an electrode may include, for example, a step of forming an electrode active material layer by forming the mixture powder composition into a layer, and a step of laminating the obtained electrode active material layer with a current collector. As a specific example, an electrode may be produced by a method including a step of supplying the mixture powder composition to a roll-type pressure molding apparatus that includes a pair of rolls and pressure-molding the mixture powder composition by the pair of rolls to form an electrode active material layer, and a step of laminating the electrode active material layer with a current collector. As another specific example, an electrode may be produced by a method including a step of filling the mixture powder composition into a mold and pressure-molding the mixture powder composition to form an electrode active material layer, and a step of laminating the electrode active material layer with a current collector. As yet another specific example, an electrode may be produced by a method including a step of applying the mixture powder composition onto a suitable support (for example, a support sheet) and performing a heating treatment and a pressing treatment as necessary to form an electrode active material layer, a step of laminating the electrode active material layer with a current collector, and a step of removing the support.

As still another specific example, the method for producing an electrode may include forming an electrode active material layer on a current collector by supplying a current collector and the mixture powder composition to pass between a pair of rolls in a roll-type pressure molding apparatus that includes the pair of rolls. In this method, the mixture powder composition is pressure-molded by the pair of rolls while the current collector is sent out through the pair of rolls, so that the electrode active material layer is formed on the current collector. In this case, from the viewpoint of increasing bonding strength between the electrode active material layer and the current collector, the roll temperature is preferably Tg + 10°C or higher, more preferably Tg + 30°C or higher, and still more preferably Tg + 40°C or higher, and is preferably Tg + 120°C or lower, more preferably Tg + 100°C or lower, and still more preferably Tg + 80°C or lower. Herein, Tg represents the glass transition temperature of the particulate polymer. In an example, the roll temperature may be preferably 25°C or higher, more preferably 50°C or higher, and still more preferably 80°C or higher, and is preferably 200°C or lower, more preferably 150°C or lower, and still more preferably 120°C or lower. In addition, the press line pressure between the rolls is preferably 10 kN/m or more, more preferably 200 kN/m or more, and still more preferably 500 kN/m or more, and is preferably 2000 kN/m or less, more preferably 1500 kN/m or less, and still more preferably 1200 kN/m or less, from the viewpoint of improving uniformity of the thickness of the electrode active material layer. Furthermore, the molding speed at the time of pressure-molding is preferably 0.1 m/minute or more, and more preferably 4 m/minute or more, and is preferably 20 m/minute or less, and more preferably 10 m/minute or less.

As another specific example, a method for producing an electrode may include applying the mixture powder composition onto a current collector to form an electrode active material layer. The applying of the mixture powder composition may be performed by, for example, an electrostatic coating method. The electrostatic coating method is a method in which the mixture powder composition to which a charging device has applied an electric charge is applied onto a current collector, so that the mixture powder composition can be efficiently fixed to the current collector by electrostatic attraction. In the electrostatic coating method described above, from the viewpoint of efficiently fixing the mixture powder composition by increasing the electrostatic attraction, the current collector may be grounded or the current collector may be charged to a polarity opposite with respect to that of the mixture powder composition. In addition, the applying of the mixture powder composition is generally performed using a coating apparatus separated from the current collector. For example, the mixture powder composition may be applied onto the current collector by dropping the mixture powder composition from a nozzle provided above the current collector with reference to the gravitational direction. Furthermore, for example, the mixture powder composition may be applied onto the current collector using an injector (for example, a spray gun) capable of jetting the mixture powder composition by the pressure of a gas such as air. Usually, an electric charge is given to the mixture powder composition in a coating apparatus such as the nozzle and the injector.

After the electrode active material layer is formed by applying the mixture powder composition onto the current collector, a thickness adjusting step of making the thickness of the electrode active material layer uniform may be performed. For example, the electrode active material layer may be evened with a blade to make the thickness uniform.

After the electrode active material layer is formed by applying the mixture powder composition onto the current collector, the current collector and the electrode active material layer may be subjected to a heating treatment. By the heating treatment, the particulate polymer in the mixture powder composition applied onto the current collector can be effectively adhered to the current collector, the electrode active material, and the optional component such as the electroconductive material. Therefore, bonding strength between the current collector and the electrode active material layer can be increased. The mechanical strength of the electrode active material layer can be increased.

After the electrode active material layer is formed by applying the mixture powder composition onto the current collector, the electrode active material layer may be subjected to a pressing treatment. Since the density of the electrode active material layer can be increased by the pressing treatment, capacity of the electrode can be increased.

Generally, heating treatment and pressing treatments are performed by causing the current collector and the electrode active material layer to pass between a pair of heated rolls. In this case, the heating treatment temperature (roll temperature) is preferably Tg + 10°C or higher, more preferably Tg + 30°C or higher, and still more preferably Tg + 40°C or higher, and is preferably Tg + 120°C or lower, more preferably Tg + 100°C or lower, and still more preferably Tg + 80°C or lower, from the viewpoint of increasing bonding strength between the electrode active material layer and the current collector. Herein, Tg represents the glass transition temperature of the particulate polymer. In addition, the pressing pressure (press line pressure between rolls) is preferably 10 kN/m or more, more preferably 200 kN/m or more, and still more preferably 500 kN/m or more, and is preferably 2000 kN/m or less, more preferably 1500 kN/m or less, and still more preferably 1200 kN/m or less, from the viewpoint of improving uniformity of the thickness of the electrode active material layer. Furthermore, the traveling speed of the current collector and the electrode active material layer passing between the rolls is preferably 0.1 m/minute or more, more preferably 3 m/minute or more, and still more preferably 4 m/minute or more, and is preferably 50 m/minute or less, more preferably 20 m/minute or less, and still more preferably 10 m/minute or less.

The electrode including the current collector and the electrode active material layer can be produced by the above-described production method. The method for producing the electrode may further include an optional step. For example, from the viewpoint of reducing the fluctuation in the thickness of the electrode or increasing the density of the electrode active material layer to further increase the capacity, a post-pressing treatment may be further performed as necessary. The method of the post-pressing treatment is preferably a roll pressing method. In the roll pressing method, the electrode is pressed between two rolls arranged in parallel to each other to press the electrode. Herein, the temperature of the roll may be adjusted by heating or cooling as necessary.

<Non-aqueous secondary battery>

A non-aqueous secondary battery according to an embodiment of the present invention includes the electrode according to the above-described embodiment. Generally, such a non-aqueous secondary battery includes a positive electrode, a negative electrode, and a non-aqueous electrolyte solution, and includes the electrode according to the above-described embodiment as at least one of the positive electrode and the negative electrode. Therefore, in the non-aqueous secondary battery, the positive electrode may be the electrode according to the above-described embodiment, the negative electrode may be the electrode according to the above-described embodiment, and both the positive electrode and the negative electrode may be the electrode according to the above-described embodiment.

As the non-aqueous electrolyte solution, for example, an electrolyte solution in which a supporting electrolyte is dissolved in a non-aqueous solvent may be used. The supporting electrolyte is preferably a lithium salt. Examples of lithium salts may include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Among these, $LiPF_6$, $LiClO_4$, and $CF_3SO_3Li$ that are easily soluble in solvents and exhibit a high degree of dissociation are preferable. As the supporting electrolytes, one type thereof may be solely used, and two or more types thereof may also be used in combination. Generally, the higher the degree of dissociation of the supporting electrolyte is, the higher the ionic conductivity tends to be.

The concentration of the supporting electrolyte is preferably set in a range of 0.5 mol/liter to 2.5 mol/liter depending on the type of the supporting electrolyte. Since the ionic conductivity can be increased with the concentration of the supporting electrolyte falling within such a range, the charging characteristics and the discharging characteristics of the non-aqueous secondary battery can be improved.

The non-aqueous solvent used in the non-aqueous electrolyte solution is not particularly limited as long as it can dissolve the supporting electrolyte. Examples of the non-aqueous solvent may include a carbonate solvent such as dimethyl carbonate (DMC), ethylene carbonate (EC), diethyl carbonate (DEC), propylene carbonate (PC), butylene carbonate (BC), and methyl ethyl carbonate (MEC); an ester solvent such as γ-butyrolactone and methyl formate; an ether solvent such as 1,2-dimethoxyethane and tetrahydrofuran; a sulfur-containing compound solvent such as sulfolane and dimethyl sulfoxide; and an ionic liquid also used as a supporting electrolyte. Among these, a carbonate solvent is preferable because the dielectric constant is high and the stable electric potential region is wide. As the non-aqueous solvents, one type thereof may be solely used, and two or more types thereof may also be used in combination. Generally, the lower the viscosity of the non-aqueous solvent is, the higher the ionic conductivity becomes. The higher the dielectric constant is, the higher the solubility of the supporting electrolyte becomes. Since both characteristics are in a trade-off relationship, it is preferable to use the non-aqueous solvent by adjusting the ionic conductivity according to the type and mixing ratio of the solvents. In addition, a non-aqueous solvent in which all or part of hydrogen atoms are replaced with fluorine atoms may be used either in combination or as the all solvent.

The non-aqueous electrolyte solution may contain an optional additive in combination with the supporting electrolyte and the non-aqueous solvent. Examples of the optional additives may include a carbonate-based compound such as vinylene carbonate (VC); a sulfur-containing compound such as ethylene sulfite (ES); and a fluorine-containing compound such as fluoroethylene carbonate (FEC). As the additives, one type thereof may be solely used, and two or more types thereof may also be used in combination.

The non-aqueous secondary battery may further include a separator. Examples of the separator may include a microporous film or a nonwoven fabric formed of a resin such as a polyolefin resin or an aromatic polyamide resin; and a porous resin coating film containing an inorganic ceramic powder. Specific examples of the separator may include a microporous film formed of a resin such as a polyolefin-based polymer (for example, polyethylene, polypropylene, polybutene, and polyvinyl chloride) and a mixture or copolymer thereof; a microporous film formed of a resin such as polyethylene terephthalate, polycycloolefin, polyether sulfone, polyamide, polyimide, polyimide amide, polyaramide, polycycloolefin, nylon, and polytetrafluoroethylene; a fabric material woven with fibers of a polyolefin-based resin or a nonwoven fabric of the fibers; and an aggregate of insulating material particles. Among these, a microporous film formed of a polyolefin-based resin is preferable from the viewpoint that the film thickness of the separator as a whole can be reduced and the capacity per volume can be improved by increasing the ratio of the active material in the non-aqueous secondary battery.

The thickness of the separator is preferably 1.0 μm or more, and more preferably 3 μm or more, and is preferably 40 μm or less, more preferably 30 μm or less, and still more preferably 25 μm or less, from the viewpoint of reducing the internal resistance of the separator in the non-aqueous secondary battery and the viewpoint of excellent workability in producing the non-aqueous secondary battery.

Examples of the method for producing a non-aqueous secondary battery may include a method including superposing a positive electrode and a negative electrode with each other via a separator, winding or folding them according to a battery shape, placing them in a battery container, filling the battery container with an electrolyte solution, and sealing the battery container. Further, an expanded metal; an overcurrent preventive element such as a fuse or a PTC element; and a lead plate, or the like may be included as needed to prevent pressure-rise inside the battery and overcharge/discharge. The shape of the non-aqueous secondary battery may be any of, for example, a coin type, a button type, a sheet type, a cylindrical type, a square, and a flat type. The material of the battery container is preferably one that inhibits the intrusion of moisture into the inside of the battery, and examples thereof may include a metal and a laminate made of aluminum or the like.

Since the non-aqueous secondary battery does not use a slurry containing a large amount of a solvent in the processes for producing the mixture powder composition and the electrode, energy required for production can be reduced. Furthermore, continuous operation is easy, and the yield can be increased.

<Examples>

Hereinafter, the present invention will be specifically described by illustrating Examples. The present invention is not limited to the Examples described below. The present invention may be optionally modified for implementation without departing from the scope of claims and its equivalents.

In the following description, "%" and "part" representing quantity are on the basis of weight, unless otherwise specified. The operation described below was performed under the conditions of normal temperature and normal pressure (at 25°C and 1 atm.) in the atmosphere, unless otherwise specified.

<Method for measuring sieve residual fraction of binder powder>

The following sieve test was performed using a sieve having opening size of 250 $\mu$m (60 mesh) and a sieve having opening size of 74 $\mu$m (200 mesh), and the sieve residual fraction of the binder powder in the sieve test using each sieve was measured.

Binder powder W(0) g was put through each sieve. The weight W(1) g of binder powder (residual component) remaining on the sieve was measured. The sieve residual fraction was calculated by the following equation (M1).

$$\text{Sieve residual fraction (\%) = W(1) / W(0) × 100}$$

(M1)

<Method for measuring average primary particle diameter of particulate polymer contained in binder powder>

A binder powder was added to an 1% aqueous solution of sodium linear alkylbenzene sulfonate, and dispersed by ultrasonic waves to obtain a dispersion liquid in which the particulate polymer contained in the binder powder was dispersed. A cumulative particle diameter distribution of this dispersion liquid was measured by a Coulter counter (a particle diameter measuring instrument "Coulter Counter LS230" manufactured by Beckman Coulter, Inc.). The particle diameter at which the integrated value obtained by integrating from the small diameter side of the cumulative particle diameter distribution becomes 50% was obtained as the average primary particle diameter based on the volume of the particulate polymer contained in the binder powder.

<Method for measuring glass transition temperature>

The glass transition temperature Tg of the particulate polymer contained in the binder powder was measured using a differential scanning calorimeter ("DSC6220SII" manufactured by SII Nano Technology Inc.) according to JIS K 7121:1987 under condition of a rate of temperature increase of 20°C/min.

<Method for measuring volume-average particle diameter of electrode active material>

A cumulative particle diameter distribution of the electrode active material was measured by a dry system using a laser diffraction/scattering particle diameter distribution measuring apparatus ("Microtrac MT3200II" manufactured by Nikkiso Co., Ltd.). The particle diameter at which the integrated value obtained by integrating from the small diameter side of the cumulative particle diameter distribution became 50% was obtained as the volume-average particle diameter of the electrode active material.

<Method for measuring ratio of average particle diameter of particulate polymer to average particle diameter of electrode active material in electrode active material layer>

A cross section for observation was formed in the positive electrode using a cross section polisher ("IB-09020CP" manufactured by JEOL Ltd.). Next, the cross section was observed with an FE-SEM (field emission scanning electron microscope "JSM-7800F" manufactured by JEOL Ltd.). Cross-sectional observation was performed at conditions of an observation magnification of 1000, an irradiation voltage of 1 kV, and an irradiation current of 5.0 × 10$^{-8}$ A.

In the cross-sectional image of the positive electrode active material layer obtained by cross-sectional observation, the diameter of each particle of the particulate polymer was measured by performing circumcircle fitting on the particles (primary particles) of the particulate polymer in the positive electrode active material layer. The average of the diameters of 50 arbitrarily selected particles of the particulate polymer was obtained as the average particle diameter $D_B$ of the particulate polymer in the positive electrode active material layer. Specifically, the cross-sectional image was binarized using an image analysis software ("WinROOF" manufactured by Mitani Corp.) while the emphasis conditions were set to "brightness: 40" and "contrast: +30" and a filter was set to 7×7 and two threshold values (threshold values of 119 and 165). Then, the surface of each of the resulting 50 SEM images was observed in plan view, and the area of the particulate polymer was determined. Assuming that the particulate polymer was a perfect sphere, the diameter of the particulate polymer was calculated from the obtained area of the particulate polymer. From the diameters of the 50 particles of the particulate polymer, the volume was calculated assuming that the particulate polymer was a perfect sphere. The total volume of all the particles of the particulate polymer was set to 100%, and the volume of the particulate polymer present in each of the particle diameter sections was expressed as a percentage. Then, the particle diameter at which the cumulative volume of the particulate polymer obtained by integrating from the small diameter side became 50% was defined as the average particle diameter ($D_B$) of the particulate polymer in the electrode active material layer.

Furthermore, in the cross-sectional image of the positive electrode active material layer obtained by the cross-sectional observation, the diameter of each of the particles of the positive electrode active material was measured by performing circumcircle fitting on the particles of the positive electrode active material in the positive electrode active material layer. The average of the diameters of 50 arbitrarily selected particles of the positive electrode active material was obtained as the average particle diameter $D_A$ of the positive electrode active material in the positive electrode active material layer. Specifically, the cross-sectional image was binarized using an image analysis software ("WinROOF" manufactured by Mitani Corp.) while the emphasis conditions were set to "brightness: 40" and "contrast: +30" and a filter was set to $7 \times 7$ and two threshold values (threshold values of 195 and 255). Then, the surface of each of the resulting 50 SEM images was observed in plan view, and the area of the particles of the positive electrode active material was determined. Assuming that the particle of the positive electrode active material was a perfect sphere, the diameter of the particle of the positive electrode active material was calculated from the obtained area of the particle of the positive electrode active material. From the diameters of the 50 particles of the positive electrode active material, the volume was calculated assuming that the particle of the positive electrode active material was a perfect sphere. The total volume of all the particles of the positive electrode active material was set to 100%, and the volume of the particles of the positive electrode active material present in each of the particle diameter sections was expressed as a percentage. Then, the particle diameter at which the cumulative volume of the particle of the positive electrode active material obtained by integrating from the small diameter side became 50% was defined as the average particle diameter ($D_A$) of the particle of the positive electrode active material in the electrode active material layer.

A ratio ($D_B/D_A$) of the average particle diameter $D_B$ of the particulate polymer to the average particle diameter $D_A$ of the positive electrode active material in the positive electrode active material layer was calculated.

<Method for evaluating bonding strength between current collector and electrode active material layer>

From the positive electrode, a rectangular test piece having a length of 40 mm and a width of 10 mm was cut out. A cellophane tape (compliant with JIS Z1522) was fixed to a stable test table, and the test piece was bonded to the cellophane tape. The bonding was performed such that the positive electrode active material layer of the test piece was in contact with the cellophane tape. One end of the current collector was pulled at a tensile speed of 100 mm/minute in a perpendicular direction to measure a stress when the current collector was peeled off. The stress measurement was performed three times, and the average value of the stresses was determined as the peel strength. The larger the value of the peel strength is, the better the bonding strength between the positive electrode active material layer and the current collector is. Therefore, based on the peel strength measured, the bonding strength was evaluated on the basis of the following criteria.

A: Peel strength was 30 N/m or more.
B: Peel strength was 25 N/m or more and less than 30 N/m.
C: Peel strength was 20 N/m or more and less than 25 N/m.
D: Peel strength was less than 20 N/m.

<Example 1>

(1-1. Production of binder powder)

- Preparation of monomer composition -

67.0 parts of styrene as the aromatic monovinyl monomer, 32.5 parts of n-butyl acrylate as the (meth)acrylic acid alkyl ester monomer, and 0.5 part of ethylene glycol dimethacrylate as the crosslinkable monomer were mixed to prepare a monomer composition.

- Preparation of metal hydroxide -

An aqueous magnesium chloride solution in which 10.0 parts of magnesium chloride was dissolved in 200 parts of ion-exchanged water and an aqueous sodium hydroxide solution in which 7.0 parts of sodium hydroxide was dissolved in 50 parts of ion-exchanged water were prepared. The aqueous sodium hydroxide solution was gradually added to the aqueous magnesium chloride solution under stirring to produce a colloidal dispersion liquid containing magnesium hydroxide as a metal hydroxide.

- Suspension polymerization -

A particulate polymer was prepared by a suspension polymerization method. Specifically, the monomer composition obtained as described above was added to the above-described colloidal dispersion liquid containing magnesium hydroxide, and the mixture was further stirred. After that, 3.0 parts of t-butylperoxy-2-ethylhexanoate ("PERBUTYL O" manufactured by NOF CORP.) as a polymerization initiator was further added to the colloidal dispersion liquid to obtain a mixed liquid. The resulting mixed liquid was subjected to high-shear agitation for 1 minute at a number of revolutions of 12,000 rpm using an in-line emulsifying disperser ("CAVITRON" manufactured by Pacific Machinery & Engineering Co., Ltd.) to form droplets of the monomer composition in the colloidal dispersion liquid containing magnesium hydroxide.

The colloidal dispersion liquid in which droplets of the monomer composition were formed as described above was placed in a reaction vessel, and the temperature was raised to 90°C to carry out a polymerization reaction for 5 hours, thereby obtaining a dispersion liquid. The dispersion liquid was purified by decompression treatment at 90°C using an evaporator for 2 hours to obtain an aqueous dispersion liquid containing a particulate polymer.

- Washing, drying and classifying -

While the aqueous dispersion liquid containing the particulate polymer was stirred, sulfuric acid was added dropwise thereto at room temperature (25°C) to perform acid-washing until pH became 6.5 or lower. After that, a water washing treatment, which includes filtering to obtain an solid content, dehydration of the obtained solid content, and re-slurrying of the solid content by adding 500 parts of ion-exchanged water in this order, was repeated 10 times. After that, filtration separation was performed, and the obtained solid content was placed in a dryer, and dried at 40°C for 48 hours. The solid content after drying was classified using an ultrasonic sieve (opening size: 75 $\mu$m) to obtain a binder powder having a powdery form. The particulate polymer contained in the obtained binder powder was non-hollow particles having no hollow therein.

The obtained binder powder was evaluated by the methods described above.

(1-2. Production of mixture powder composition)

Into a high-speed mixer (type FS2 manufactured by EARTHTECHNICA CO., LTD.,), 96.0 parts of NMC811 (LiNi$_{0.8}$Mn$_{0.1}$Co$_{0.1}$O$_2$, volume-average particle diameter was 30.0 $\mu$m) as a positive electrode active material, and 2.0 parts of carbon black ("Super C65" manufactured by Imerys S.A.) as an electroconductive material in a solid content equivalent were charged, and mixed under the conditions of 10°C, an agitator rotational speed of 2000 rpm, and a chopper rotational speed of 3500 rpm for 30 minutes. After that, 2.0 parts of the binder powder prepared above was added thereto, and mixed under the conditions of 10°C, an agitator rotational speed of 500 rpm, and a chopper rotational speed of 800 rpm for 30 minutes to obtain a powdery mixture powder composition.

(1-3. Production of positive electrode: Dry method (electrostatic coating))

Using an electrostatic screen printing machine ("T-1" manufactured by BERG Co., Ltd.), the above-described mixture powder composition was applied in a dry system onto an aluminum foil (thickness: 15 $\mu$m) as a current collector to obtain a positive electrode raw film. The applying was performed so that the amount (coating basis weight) of the applied mixture powder composition per unit area of the current collector was 18 mg/cm$^2$. The positive electrode raw film was heat-roll-pressed (temperature: 130°C, load: 30 t) to obtain a positive electrode including the current collector and the positive electrode active material layer (density of the positive electrode active material layer: 3.3 g/cm$^3$). The obtained positive electrode was evaluated by the methods described above.

<Example 2>

Production and evaluation of a binder powder, a mixture powder composition, and a positive electrode were carried out by the same method as that in Example 1 except that, in the classification in step (1-1), the ultrasonic sieving machine having opening size of 100 $\mu$m was used.

<Example 3>

Production and evaluation of a binder powder, a mixture powder composition, and a positive electrode were carried out by the same method as that in Example 1 except that, in the classification in step (1-1), the ultrasonic sieving machine having opening size of 297 $\mu$m was used.

<Example 4>

- Emulsion polymerization method -

Into a 5-MPa pressure resistant container equipped with a stirrer, a monomer composition including 63 parts of styrene as the aromatic monovinyl monomer, 24.5 parts of n-butyl acrylate as the (meth)acrylic acid alkyl ester monomer, 2 parts of methacrylic acid as the ethylenically unsaturated carboxylic acid monomer, and 10 parts of glycidyl methacrylate and 0.5 part of ethylene glycol dimethacrylate as the crosslinkable monomers, 1 part of sodium dodecylbenzenesulfonate as the emulsifier, 150 parts of ion-exchanged water, and 0.5 part of potassium persulfate as the polymerization initiator were charged, sufficiently stirred, and then heated to 60°C to initiate polymerization. When the polymerization conversion became 96%, the reaction was stopped by cooling to obtain an aqueous dispersion liquid containing a particulate polymer. The particulate polymer thus obtained was non-hollow particles.

- Drying and classifying -

The aqueous dispersion obtained above was dried using a spray dryer ("ADL311-A" manufactured by Yamato Scientific Co., Ltd.) to obtain a powdery solid. Specifically, the aqueous dispersion was diluted with ion-exchanged water to 10% by weight, and the powdery solid was prepared at Inlet 110°C and under a flow rate condition of 3.0 g/min. The dried powdery solid was classified using an ultrasonic sieving machine (opening size: 75 $\mu$m) to obtain a binder powder having a powdery form. The particulate polymer contained in the obtained binder powder was non-hollow particles having no hollow therein.
The obtained binder powder was evaluated by the methods described above.
In step (1-2), the binder powder produced in Example 4 was used instead of the binder powder produced in Example 1. In addition, in step (1-2), the type of the positive electrode active material was changed to NMC811 (LiNi$_{0.8}$Mn$_{0.1}$Co$_{0.1}$O$_2$, volume-average particle diameter was 4.0 $\mu$m). Except for the above-mentioned matters, production and evaluation of a mixture powder composition and a positive electrode were carried out by the same method as that in Example 1.

<Example 5>

The amount of sodium dodecylbenzene sulfonate as the emulsifier was changed to 0.5 part. In addition, the type of the positive electrode active material was changed to NMC811 (LiNi$_{0.8}$Mn$_{0.1}$Co$_{0.1}$O$_2$, volume-average particle diameter was 9.0 $\mu$m). Except for the above-mentioned matters, production and evaluation of a binder powder, a mixture powder composition, and a positive electrode were carried out by the same method as that in Example 4.

<Example 6>

In the suspension polymerization in step (1-1), the amount of magnesium chloride was changed from 10.0 parts to 15.0 parts, and the amount of sodium hydroxide was changed from 7.0 parts to 10.5 parts. In step (1-2), the type of the positive electrode active material was changed to NMC811 (LiNi$_{0.8}$Mn$_{0.1}$Co$_{0.1}$O$_2$, volume-average particle diameter: 18.0 $\mu$m). Except for the above-mentioned matters, production and evaluation of a binder powder, a mixture powder composition, and a positive electrode were carried out by the same method as that in Example 1.

<Example 7>

Production and evaluation of a binder powder, a mixture powder composition, and a positive electrode were carried out by the same method as that in Example 1 except that, in the suspension polymerization in step (1-1), the amount of magnesium chloride was changed from 10.0 parts to 5.0 parts and the amount of sodium hydroxide was changed from 7.0 parts to 3.5 parts.

<Example 8>

Production and evaluation of a binder powder, a mixture powder composition, and a positive electrode were carried out by the same method as that in Example 1 except that, in the suspension polymerization in step (1-1), the amount of magnesium chloride was changed from 10.0 parts to 3.0 parts and the amount of sodium hydroxide was changed from 7.0 parts to 2.1 parts.

<Example 9>

The amount of sodium dodecylbenzene sulfonate as the emulsifier was changed to 1.5 parts. In addition, the type of the positive electrode active material was changed to NMC811 (LiNi$_{0.8}$Mn$_{0.1}$Co$_{0.1}$O$_2$, volume-average particle diameter was 3.0 $\mu$m). Except for the above-mentioned matters, production and evaluation of a binder powder, a mixture powder composition, and a positive electrode were carried out by the same method as that in Example 4.

<Example 10>

Production and evaluation of a binder powder, a mixture powder composition, and a positive electrode were carried out by the same method as that in Example 1 except that, in the suspension polymerization in step (1-1), the amount of magnesium chloride was changed from 10.0 parts to 2.0 parts and the amount of sodium hydroxide was changed from 7.0 parts to 1.4 parts.

<Example 11>

Production and evaluation of a binder powder, a mixture powder composition, and a positive electrode were carried out by the same method as that in Example 1 except that, in step (1-2), the binder powder produced in Example 4 was used instead of the binder powder produced in Example 1.

<Example 12>

In the suspension polymerization in step (1-1), the amount of magnesium chloride was changed from 10.0 parts to 3.0 parts, and the amount of sodium hydroxide was changed from 7.0 parts to 2.1 parts. In addition, in step (1-2), the type of the positive electrode active material was changed to NMC811 (LiNi$_{0.8}$Mn$_{0.1}$Co$_{0.1}$O$_2$, volume-average particle diameter: 10.0 $\mu$m). Except for the above-mentioned matters, production and evaluation of a binder powder, a mixture powder composition, and a positive electrode were carried out by the same method as that in Example 1.

<Example 13>

Production and evaluation of a binder powder, a mixture powder composition, and a positive electrode were carried out by the same method as that in Example 1 except that, in the preparation of the monomer composition in step (1-1), the amount of styrene as the aromatic monovinyl monomer was changed to 50.0 parts and the amount of n-butyl acrylate as the (meth)acrylic acid alkyl ester monomer was changed to 49.5 parts.

<Example 14>

Production and evaluation of a binder powder, a mixture powder composition, and a positive electrode were carried out by the same method as that in Example 1 except that, in the preparation of the monomer composition in step (1-1), the amount of styrene as the aromatic monovinyl monomer was changed to 87.3 parts and the amount of n-butyl acrylate as the (meth)acrylic acid alkyl ester monomer was changed to 2.2 parts.

<Example 15>

Production and evaluation of a binder powder, a mixture powder composition, and a positive electrode were carried out by the same method as that in Example 1 except that, in the preparation of the monomer composition in step (1-1), the amount of styrene as the aromatic monovinyl monomer was changed to 99.5 parts and the amount of n-butyl acrylate as the (meth)acrylic acid alkyl ester monomer was changed to 0 part.

<Example 16>

Production and evaluation of a binder powder, a mixture powder composition, and a positive electrode were carried out by the same method as that in Example 1 except that, in the preparation of the monomer composition in step (1-1), the amount of styrene as the aromatic monovinyl monomer was changed to 47.0 parts and the amount of n-butyl acrylate as the (meth)acrylic acid alkyl ester monomer was changed to 52.5 parts.

<Example 17>

Polyvinylidene fluoride (PVDF, "KYNAR HSV900" manufactured by Arkema) used as a raw material of a binder powder was classified using an ultrasonic sieving machine (opening size: 75 $\mu$m) to obtain a binder powder. The obtained binder powder was evaluated by the methods described above.

In step (1-2), the binder powder produced in Example 17 was used instead of the binder powder produced in Example 1. In addition, in step (1-2), the type of the positive electrode active material was changed to NMC811 (LiNi$_{0.8}$Mn$_{0.1}$Co$_{0.1}$O$_2$, volume-average particle diameter was 3.0 $\mu$m). Except for the above-mentioned matters, production and evaluation of a mixture powder composition and a positive electrode were carried out by the same method as that in Example 1.

<Comparative Example 1>

Production and evaluation of a binder powder, a mixture powder composition, and a positive electrode were carried out by the same method as that in Example 1 except that, in step (1-1), the classification was performed using an ultrasonic sieving machine having opening size of 354 $\mu$m.

<Comparative Example 2>

The amount of sodium dodecylbenzene sulfonate as the emulsifier was changed to 2.0 parts. In addition, the type of the positive electrode active material was changed to NMC811 (LiNi$_{0.8}$Mn$_{0.1}$Co$_{0.1}$O$_2$, volume-average particle diameter was 30.0 $\mu$m). Except for the above-mentioned matters, production and evaluation of a binder powder, a mixture powder composition, and a positive electrode were carried out by the same method as that in Example 4.

<Comparative Example 3>

Polyvinylidene fluoride (PVDF, "KYNAR HSV900" manufactured by Arkema) used as a raw material of a binder powder was classified using an ultrasonic sieving machine (opening size: 354 $\mu$m) to obtain a binder powder. The obtained binder powder was evaluated by the methods described above.

In step (1-2), the binder powder produced in Comparative Example 3 was used instead of the binder powder produced in Example 1. In addition, in step (1-2), the type of the positive electrode active material was changed to NMC811 (LiNi$_{0.8}$Mn$_{0.1}$Co$_{0.1}$O$_2$, volume-average particle diameter was 3.0 $\mu$m). Except for the above-mentioned matters, production and evaluation of a mixture powder composition and a positive electrode were carried out by the same method as that in Example 1.

<Results>

The results of Examples and Comparative Examples described above are shown in the following tables. In the tables below, abbreviations have the following meanings:

Tg: Glass transition temperature
PVDF: polyvinylidene fluoride
Sieve residual fraction (250 $\mu$m) : sieve residual fraction in sieve test using a sieve having opening size of 250 $\mu$m
Sieve residual fraction (74 $\mu$m) : sieve residual fraction in sieve test using a sieve having opening size of 250 $\mu$m

[Table 1]

| [Table 1. Results of Exam ples 1 t 10] | | | | | | | | | | |
|---|---|---|---|---|---|---|---|---|---|---|
| | Example | | | | | | | | | |
| | 1 | 2 | 3 | 4 | 5 | 6 | 7 | 8 | 9 | 10 |
| Binder powder | | | | | | | | | | |
| Particulate polymer | A | A | A | A2 | A3 | A4 | A5 | A6 | A7 | A8 |
| Average primary particle diameter of particulate polymer ($\mu$m) | 5.0 | 5.0 | 5.0 | 0.5 | 1.0 | 2.0 | 10.0 | 15.0 | 0.3 | 20.0 |

(continued)

**[Table 1. Results of Exam ples 1 t 10]**

| | Example | | | | | | | | | |
|---|---|---|---|---|---|---|---|---|---|---|
| | 1 | 2 | 3 | 4 | 5 | 6 | 7 | 8 | 9 | 10 |
| Binder powder | | | | | | | | | | |
| Tg of particulate polymer (°C) | 60.0 | 60.0 | 60.0 | 60.0 | 60.0 | 60.0 | 60.0 | 60.0 | 60.0 | 60.0 |
| Sieve residual fraction (250μm) of binder powder | 0.0% | 0.0% | 10.0% | 0.0% | 0.0% | 0.0% | 0.0% | 0.0% | 0.0% | 0.0% |
| Sieve residual fraction (74μm) of binder powder | 2% | 5% | 25% | 2% | 2% | 2% | 2% | 2% | 2% | 2% |
| Mixture powder composition | | | | | | | | | | |
| Volume-average particle diameter of active material (μm) | 30.0 | 30.0 | 30.0 | 4.0 | 9.0 | 18.0 | 30.0 | 30.0 | 3.0 | 30.0 |
| Electrode | | | | | | | | | | |
| Ratio $D_R/D_A$ of average particle diameters | 0.20 | 0.20 | 0.20 | 0.10 | 0.10 | 0.10 | 0.30 | 0.40 | 0.12 | 0.70 |
| Peel strength | A | A | B | A | A | A | A | A | B | B |

[Table 2]

**[Table 2. Results of Examples 11 to 17]**

| | Example | | | | | | |
|---|---|---|---|---|---|---|---|
| | 11 | 12 | 13 | 14 | 15 | 16 | 17 |
| Binder powder | | | | | | | |
| Particulate polymer | A2 | A6 | B | C | D | E | PVDF |
| Average primary particle diameter of particulate polymer (um) | 0.5 | 15.0 | 5.0 | 5.0 | 5.0 | 5.0 | 0.3 |
| Tg of particulate polymer (°C) | 60.0 | 60.0 | 35.0 | 100.0 | 110.0 | 30.0 | -35 |
| Sieve residual fraction (250μm) of binder powder | 0.0% | 0.0% | 0.0% | 0.0% | 0.0% | 0.0% | 0.0% |
| Sieve residual fraction (74μm) of binder powder | 2% | 2% | 2% | 2% | 2% | 2% | 2% |
| Mixture powder composition | | | | | | | |
| Volume-average particle diameter of active material (μm) | 30.0 | 10.0 | 30.0 | 30.0 | 30.0 | 30.0 | 3.0 |
| Electrode | | | | | | | |
| Ratio $D_B/D_A$ of average particle diameters | 0.030 | 1.20 | 0.20 | 0.20 | 0.20 | 0.20 | 0.10 |
| Peel strength | B | B | A | A | B | B | C |

[Table 3]

| [Table 3. Results of Comparative Examples 1 to 3] | Comparative Example | | |
|---|---|---|---|
| | 1 | 2 | 3 |
| Binder powder | | | |
| Particulate polymer | A | A9 | PVDF |
| Average primary particle diameter of particulate polymer ($\mu$m) | 5.0 | 0.1 | 0.3 |
| Tg of particulate polymer (°C) | 60.0 | 60.0 | -35 |
| Sieve residual fraction (250$\mu$m) of binder powder | 15% | 0.0% | 20% |
| Sieve residual fraction (74$\mu$m) of binder powder | 45% | 2% | 45% |
| Mixture powder composition | | | |
| Volume-average particle diameter of active material ($\mu$m) | 30.0 | 30.0 | 3.0 |
| Electrode | | | |
| Ratio $D_B/D_A$ of average particle diameters | 0.20 | 0.01 | 0.10 |
| Peel strength | D | D | D |

**Claims**

1. A binder powder for a non-aqueous secondary battery electrode, comprising a particulate polymer having an average primary particle diameter of 0.3 $\mu$m or more, wherein
a proportion of particles having a particle diameter greater than 250 $\mu$m is 10% by weight or less.

2. The binder powder for a non-aqueous secondary battery electrode according to claim 1, wherein a proportion of particles having a particle diameter greater than 74 $\mu$m of the binder powder is 10% by weight or less.

3. The binder powder for a non-aqueous secondary battery electrode according to claim 1, wherein an average primary particle diameter of the particulate polymer is 0.5 $\mu$m or more and 15 $\mu$m or less.

4. The binder powder for a non-aqueous secondary battery electrode according to claim 1, wherein the particulate polymer has a glass transition temperature of 35°C or higher and 100°C or lower.

5. A mixture powder composition comprising the binder powder for a non-aqueous secondary battery electrode according to any one of claims 1 to 4 and an electrode active material.

6. An electrode for a non-aqueous secondary battery, comprising a current collector and an electrode active material layer formed of the mixture powder composition according to claim 5 on the current collector.

7. The electrode for a non-aqueous secondary battery according to claim 6, wherein a ratio $D_B/D_A$ of an average particle diameter $D_B$ of the particulate polymer contained in the electrode active material layer to an average particle diameter $D_A$ of the electrode active material is 0.01 or more and 1.0 or less.

8. A non-aqueous secondary battery comprising the electrode for a non-aqueous secondary battery according to claim 6.

9. A method for producing a electrode for a non-aqueous secondary battery, comprising a step of forming an electrode active material layer from the mixture powder composition according to claim 5 in a dry system.

## INTERNATIONAL SEARCH REPORT

| International application No. |
| --- |
| **PCT/JP2024/011099** |

| A. | CLASSIFICATION OF SUBJECT MATTER |
| --- | --- |

*H01M 4/62*(2006.01)i; *H01M 4/13*(2010.01)i; *H01M 4/139*(2010.01)i
FI:  H01M4/62 Z; H01M4/13; H01M4/139

According to International Patent Classification (IPC) or to both national classification and IPC

| B. | FIELDS SEARCHED |
| --- | --- |

Minimum documentation searched (classification system followed by classification symbols)

H01M4/00-4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT | |
| --- | --- | --- |
| Category* | Citation of document, with indication, where appropriate, of the relevant passages | Relevant to claim No. |
| X | JP 7-296800 A (UNITIKA LTD.) 10 November 1995 (1995-11-10)<br>paragraphs [0004], [0008], [0009] | 1-3, 5-9 |
| X | JP 2021-021018 A (DAICEL MIRAIZU LTD.) 18 February 2021 (2021-02-18)<br>paragraphs [0075], [0076], [0084], table 2 | 1, 5-6, 8 |
| X | WO 2017/195784 A1 (ZEON CORPORATION) 16 November 2017 (2017-11-16)<br>paragraphs [0093]-[0100], [0102], examples 1-10, comparative examples 1-3, 5, table 1 | 1-2, 4-6, 8 |
| A | WO 2020/246222 A1 (ZEON CORPORATION) 10 December 2020 (2020-12-10)<br>entire text, all drawings | 1-9 |
| P, X | WO 2023/182081 A1 (MITSUI CHEMICALS, INC.) 28 September 2023 (2023-09-28)<br>paragraphs [0109]-[0111], [0116], [0118], [0119], [0128]-[0132], [0137]-[0150], [0153]-[0156], tables 1, 2, examples 1-10, comparative example 1 | 1-3, 5-6, 8-9 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **27 May 2024** | **04 June 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/011099**

| Patent document<br>cited in search report | Publication date<br>(day/month/year) | Patent family member(s) | Publication date<br>(day/month/year) |
|---|---|---|---|
| JP 7-296800 A | 10 November 1995 | (Family: none) | |
| JP 2021-021018 A | 18 February 2021 | (Family: none) | |
| WO 2017/195784 A1 | 16 November 2017 | US 2019/0144586 A1<br>paragraphs [0205]-[0225],<br>[0227], examples 1-10,<br>comparative examples 1-3, 5,<br>table 1<br>EP 3457477 A1<br>CN 109075345 A<br>KR 10-2019-0007419 A | |
| WO 2020/246222 A1 | 10 December 2020 | US 2022/0223875 A1<br>entire text, all drawings<br>EP 3981812 A1<br>CN 113874412 A<br>KR 10-2022-0016825 A | |
| WO 2023/182081 A1 | 28 September 2023 | (Family: none) | |

Form PCT/ISA/210 (patent family annex) (July 2022)

24

**REFERENCES CITED IN THE DESCRIPTION**

**Patent documents cited in the description**

- WO 2018034093 A
- US 20200052270
- JP 6327249 B
- US 20200144591
- JP 2001176757 A